# DEMANDE DE BREVET EUROPEEN

(11) **EP 0 774 593 A1**
(43) Date de publication de la demande: **21.05.1997**
(21) Numéro de dépôt: 96402452.5
(22) Date de dépôt: 15.11.1996
(51) Int. Cl.: F16C 31/04, F16C 3/035, B62D 1/18

(54) **Palier de guidage pour un corps de colonne de direction de véhicule automobile**

(30) Priorité: 16.11.1995 FR 9513609
(71) Demandeur: ECIA - EQUIPEMENTS ET COMPOSANTS POUR L'INDUSTRIE AUTOMOBILE, F-25400 Audincourt (FR)
(72) Inventeur: Mouhot, Frédéric, 25420 Voujeaucourt (FR); Schmitt, Catherine, 25350 Mandeure (FR)
(74) Mandataire: Habasque, Etienne Joel Jean-François

(57) **Abrégé**

Ce palier de guidage pour un corps de colonne de direction de véhicule automobile, du type comportant un corps de palier (4) disposé autour du corps de colonne (1) de direction et des moyens de guidage (5) des déplacements axiaux du corps de colonne dans le corps de palier, répartis entre ceux-ci, est caractérisé en ce que les moyens de guidage comprennent des moyens de roulement (6,7), déplaçables le long de pistes de roulement (10,11) du corps de palier (4), lors des déplacements du corps de colonne dans le corps de palier.

## Description

La présente invention concerne un palier de guidage pour un corps de colonne de direction de véhicule automobile.

On connaît déjà dans l'état de la technique, un certain nombre de paliers de guidage de ce type, qui comportent un corps de palier disposé autour du corps de colonne de direction et des moyens de guidage des déplacements axiaux du corps de colonne dans le corps de palier, régulièrement répartis entre ceux-ci.

Ces paliers permettent d'assurer le montage de ce corps de colonne dans une structure de fixation de ce corps sur le reste de la structure du véhicule.

Dans certains véhicules, le corps de colonne est réglable en positions axiale et angulaire pour permettre une adaptation de la position du volant de direction du véhicule à la morphologie du conducteur.

Les déplacements axiaux du volant sont obtenus par exemple par des déplacements axiaux du corps de colonne dans le palier de guidage, tandis que les déplacements angulaires du volant et donc du corps de colonne sont obtenus par des déplacements angulaires du palier de guidage dans la structure de fixation de celui-ci sur le reste de la structure du véhicule, et en particulier entre des flasques de celle-ci.

On conçoit alors que ce palier doit répondre à un certain nombre d'exigences concernant le guidage du corps de colonne.

En particulier, ce guidage doit être assuré sans jeu et présenter une résistance mécanique la plus faible possible à un déplacement du corps dans celui-ci pour faciliter les réglages en position du volant évoqués précédemment.

On a déjà développé dans l'état de la technique différents modes de réalisation de ces paliers.

C'est ainsi par exemple que ceux-ci peuvent être constitués par un corps de palier, par exemple en matière plastique, muni de moyens d'articulation sur les flasques de la structure de fixation et d'un évidement central dans lequel est monté déplaçable axialement le corps de colonne.

Cependant, un tel palier présente un certain nombre d'inconvénients, notamment au niveau de la résistance mécanique au déplacement axial du corps dans le palier.

Pour tenter de résoudre ces problèmes, on a également proposé dans l'état de la technique, de réaliser des paliers avec des zones d'appui réparties entre le corps de palier et le corps de colonne.

Cependant, ces paliers présentent un certain nombre d'inconvénients, notamment au niveau de leur tenue dans le temps.

Le but de l'invention est donc de résoudre ces problèmes.

A cet effet, l'invention a pour objet un palier de guidage pour un corps de colonne de direction de véhicule automobile, du type comportant un corps de palier disposé autour du corps de colonne de direction et des moyens de guidage des déplacements axiaux du corps de colonne dans le corps de palier, répartis entre ceux-ci, caractérisé en ce que les moyens de guidage comprennent des moyens de roulement, déplaçables le long de pistes de roulement du corps de palier, lors des déplacements du corps de colonne dans le corps de palier.

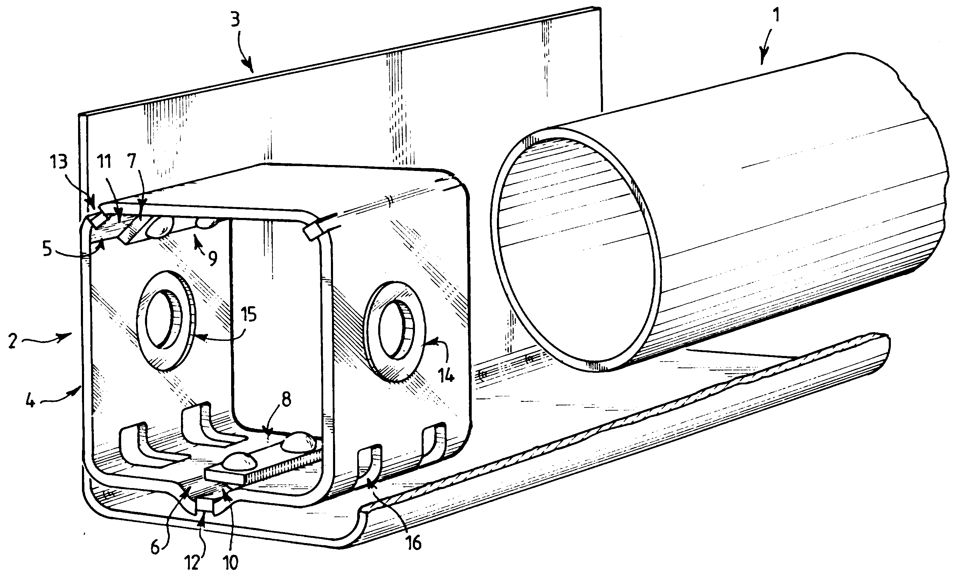

L'invention sera mieux comprise à la lecture de la description qui va suivre, donnée uniquement à titre d'exemple et faite en se référant au dessin annexé, qui représente une vue schématique en perspective d'un palier de guidage selon l'invention.

On a représenté sur cette figure, un palier de guidage pour un corps de colonne de direction de véhicule automobile.

Sur cette figure, le corps de colonne est désigné par la référence générale 1, le palier de guidage est désigné par la référence générale 2, tandis que la structure de fixation de ce corps de colonne sur le reste de la structure d'un véhicule, est désignée par la référence générale 3.

De façon classique, un arbre de direction (non représenté) est monté rotatif dans le corps de colonne de direction.

L'une des extrémités de cet arbre porte le volant de direction du véhicule, tandis que l'autre extrémité de celui-ci est adaptée pour être reliée au reste du mécanisme de direction du véhicule.

Le palier de guidage 2 comporte un corps de palier désigné par la référence générale 4, disposé autour du corps de colonne 1 et muni de moyens de guidage des déplacements axiaux du corps de colonne dans ce corps de palier, répartis entre ceux-ci.

Ces moyens de guidage sont par exemple désignés par la référence générale 5 sur cette figure.

Selon l'invention, ces moyens de guidage comprennent des moyens de roulement déplaçables le long de pistes de roulement du corps de palier, lors des déplacements du corps de colonne dans le corps de palier.

Dans l'exemple de réalisation représenté sur ces figures, il est prévu trois jeux de moyens de roulement régulièrement répartis entre le corps de palier et le corps de colonne, ces jeux étant désignés par les références générales 6 et 7 pour les deux visibles, le troisième n'étant pas visible sur cette figure, mais étant disposé en face du jeu 7.

Ces moyens de roulement peuvent par exemple comporter des organes tels que des rouleaux ou encore des billes comme cela est illustré.

Dans ce cas, ces moyens de roulement sont par exemple disposés par paires dans chaque jeu, chaque paire de moyens de roulement pouvant être disposée dans des moyens de réception de ceux-ci formant cage de déplacement.

Dans l'exemple illustré, une cage est utilisée pour chaque jeu de moyens de roulement, ces cages étant désignées par les références 8 et 9 pour les moyens de roulement 6 et 7.

Il va de soi cependant qu'une cage unique pour l'ensemble des moyens de roulement peut également être prévue entre le corps de palier et le corps de colonne.

Ces moyens de roulement sont montés déplaçables le long de pistes de roulement désignées respectivement par les références 10 et 11 pour les jeux 6 et 7, ménagées sur la face interne du corps de palier.

Des moyens de limitation des déplacements axiaux de ces moyens de roulement sont également prévus dans le corps de palier.

Dans l'exemple de réalisation représenté sur ces figures, ces moyens de limitation sont formés par des portions découpées et repliées de ce corps de palier, ces portions étant par exemple désignées par les références 12 et 13 pour les jeux 6 et 7.

Il va de soi bien entendu qu'une portion découpée et repliée est prévue à chaque extrémité par exemple de chaque piste de ce corps de palier pour limiter dans les deux sens la course de déplacement des moyens de roulement.

Les flancs latéraux de ce corps de palier peuvent également être munis de moyens d'articulation de celui-ci sur la structure de fixation 3.

Dans l'exemple de réalisation représenté sur cette figure, ces moyens d'articulation comprennent par exemple des trous 14 et 15 de passage de moyens d'articulation complémentaires de la structure 3.

Il va de soi bien entendu que différents modes de réalisation de ces moyens peuvent être envisagés, ceux-ci pouvant par exemple être constitués par des canons de pivotement venus de matière avec le corps de palier et adaptés pour s'engager dans des trous de pivotement correspondants de la structure.

Par ailleurs, au moins l'un des jeux de moyens de roulement est associé à des moyens de sollicitation élastiques permettant d'assurer un montage sous contrainte du corps de colonne dans le corps de palier afin d'éviter tout jeu de montage.

Dans l'exemple de réalisation représenté, ces moyens de sollicitation sont associés au jeu de moyens de roulement 6 pour solliciter celui-ci radialement vers l'axe du palier.

En fait, dans l'exemple illustré, la piste de roulement correspondante 10 est ménagée sur une portion de ce corps de palier déformable élastiquement, permettant de solliciter le corps de colonne dans le corps de palier.

Une telle sollicitation est obtenue par exemple en pratiquant dans cette portion du corps de palier, des lumières telles que la lumière 16 permettant de conférer à cette portion du corps de palier l'élasticité souhaitée.

On conçoit alors que lors de l'engagement du corps de colonne 1 dans le corps de palier 4, celui-ci s'opère à l'encontre de la sollicitation élastique appliquée sur les moyens de roulement 6 par cette portion du corps de palier, pour assurer un montage sans jeu du corps de colonne dans le corps de palier.

En fonctionnement, lorsque le corps de colonne 1 se déplace axialement dans le corps de palier 4, les moyens de roulement 6 et 7 se déplacent également le long des pistes de roulement 10,11 correspondantes, pour suivre ces déplacements du corps de colonne, mais d'une distance qui correspond à la moitié de la distance de déplacement du corps de colonne.

Cette structure permet alors de réduire considérablement l'effort à appliquer sur le corps de colonne pour permettre son déplacement axial dans le corps de palier lors des réglages en position du volant évoqués précédemment.

On notera également que le corps de palier peut par exemple être réalisé à partir d'une plaque de tôle, tandis que les moyens de réception des moyens de roulement peuvent être constitués par une ou plusieurs cages de réception en matière plastique.

Il va de soi bien entendu que différents modes de réalisation de ce palier peuvent être envisagés.

C'est ainsi par exemple que le corps de palier et le corps de colonne peuvent comporter des moyens de butée complémentaires autorisant un déplacement axial du corps de colonne dans le corps de palier, mais empêchant tout déplacement angulaire de ce corps de colonne par rapport au corps de palier.

Comme cela est connu, ces moyens de butée complémentaires peuvent comporter par exemple une partie en saillie du corps de colonne adaptée pour s'engager dans une partie en creux correspondante du corps de palier, ou inversement.

Bien entendu également, différents modes de réalisation des moyens de roulement peuvent être envisagés et par exemple un nombre différent de jeu de moyens de roulement peut être utilisé.

Ces moyens de roulement peuvent être constitués par des billes, des rouleaux ou autres permettant d'assurer la fonction de guidage évoquée précédemment.

Les moyens de sollicitation élastiques décrits précédemment peuvent également présenter différentes formes.

C'est ainsi par exemple que ces moyens élastiques peuvent comporter un organe élastique interposé entre l'un des jeux de moyens de roulement et le corps de palier, ces moyens se présentant par exemple sous la forme d'un organe élastique de support de la piste de roulement correspondante.

## Revendications

1. Palier de guidage pour un corps de colonne de direction de véhicule automobile, du type comportant un corps de palier (4) disposé autour du corps de colonne (1) de direction et des moyens de guidage (5) des déplacements axiaux du corps de colonne dans le corps de palier, répartis entre ceux-ci, caractérisé en ce que les moyens de guidage comprennent des moyens de roulement (6,7), déplaçables le long de pistes de roulement (10,11) du corps de palier (4), lors des déplacements du corps de colonne dans le corps de palier.

2. Palier selon la revendication 1, caractérisé en ce que les moyens de roulement sont disposés par paire dans des moyens de réception (8,9) de ceux-ci.

3. Palier selon la revendication 1 ou 2, caractérisé en ce que le corps de palier (4) comporte des moyens (12,13) de limitation des déplacements axiaux des moyens de roulement (6,7).

4. Palier selon la revendication 3, caractérisé en ce que les moyens de limitation des déplacements axiaux comprennent des portions repliées (12,13) du corps de palier (4) à chaque extrémité des pistes de roulement (10,11) de celui-ci.

5. Palier selon l'une quelconque des revendications précédentes, caractérisé en ce que le corps de palier (4) comporte des moyens de sollicitation élastique d'au moins une partie (6) des moyens de roulement pour permettre un montage sous contrainte du corps de colonne (1) dans le corps de palier (4).

6. Palier selon la revendication 5, caractérisé en ce que les moyens de sollicitation comprennent une portion du corps de palier (4) déformable élastiquement et sur laquelle est ménagée une piste de roulement (10) associée à des moyens de roulement (6) correspondants.

7. Palier selon l'une quelconque des revendications précédentes, caractérisé en ce que le corps de palier (4) comporte des moyens d'articulation (14,15) sur une structure (3) de fixation du corps sur le reste de la structure du véhicule.

8. Palier selon l'une quelconque des revendications précédentes, caractérisé en ce que les moyens de roulement (6,7) comprennent au moins trois jeux de moyens de roulement répartis entre le corps de colonne et le corps de palier.

9. Palier selon l'une quelconque des revendications précédentes, carctérisé en ce que les moyens de roulement comprennent des billes.

10. Palier selon l'une quelconque des revendications 1 à 8, caractérisé en ce que les moyens de roulement comprennent des rouleaux.

11. Palier selon l'une quelconque des revendications 2 à 10, caractérisé en ce que les moyens de réception des moyens de roulement comprennent une cage (8,9) de réception pour chaque jeu de moyens de roulement.

12. Palier selon l'une quelconque des revendications 2 à 10, caractérisé en ce que les moyens de réception comprennent une cage de réception unique pour tous les moyens de roulement.
